# EUROPÄISCHE PATENTSCHRIFT

(11) **EP 3 995 267 B1**
(45) Veröffentlichungstag und Bekanntmachung des Hinweises auf die Patenterteilung: **03.12.2025**
(21) Anmeldenummer: 21202485.5
(22) Anmeldetag: 13.10.2021
(51) Int. Cl.: B25J 15/00, B25J 15/06

(54) **GREIFEINRICHTUNG FÜR EINE HANDLINGSVORRICHTUNG EINER BEARBEITUNGSMASCHINE**
GRIPPING DEVICE FOR A HANDLING DEVICE OF A PROCESSING MACHINE
DISPOSITIF DE PRÉHENSION POUR DISPOSITIF DE MANUTENTION D'UNE MACHINE D'USINAGE

(30) Priorität: 30.10.2020 DE 102020128656
(43) Veröffentlichungstag der Anmeldung: 11.05.2022
(73) Patentinhaber: TRUMPF Werkzeugmaschinen SE + Co. KG, 71254 Ditzingen (DE); J. Schmalz GmbH, 72293 Glatten (DE)
(72) Erfinder: DEISS, Magnus, 70372 Stuttgart (DE); EISELE, Thomas, 72275 Alpirsbach-Peterzell (DE); WERNI, Benjamin, 71149 Bondorf (DE)
(74) Vertreter: Mammel und Maser Patentanwälte PartG mbB

(56) Entgegenhaltungen:
- EP-A1- 0 607 901
- GB-A- 1 193 921
- JP-A- 2004 203 532
- JP-A- H03 142 187
- JP-B2- 5 853 373
- US-A- 4 728 135

## Beschreibung

Die Erfindung betrifft eine Greifeinrichtung für eine Handlingsvorrichtung einer Bearbeitungsmaschine, insbesondere zur Bearbeitung von plattenförmigen Werkstücken.

Aus der JP 5 853 373 B1 ist eine Greifeinrichtung für eine Handlingsvorrichtung bekannt. Diese Greifeinrichtung umfasst einen Grundkörper mit mehreren Vakuumsaugern, sowie einem Dichtelement, welches die Vakuumsauger umgibt. Zum Handhaben eines plattenförmigen Werkstücks werden die Vakuumsauger durch eine Pumpe und das Dichtelement durch einen Ventilator gleichzeitig mit Unterdruck beaufschlagt.

Aus der JP 2004 203 532 A1 ist eine Greifeinrichtung zur Handhabung von einem plattenförmigen Material bekannt. Diese Greifeinrichtung umfasst eine Trägerplatte aus einem porösen Material, welches eine Vielzahl von Durchgangsbohrungen umfasst. Außen umlaufend an der Trägerplatte ist eine ausrollbare Dichtung vorgesehen. Dadurch wird ermöglicht, dass zur Handhabung von unebenen Gegenständen die ausrollbare Dichtung an dem Gegenstand anliegt und einen Unterdruckraum zwischen dem zur handhabenden Gegenstand der umlaufenden Dichtung und der porösen Trägerplatte erzeugt.

Aus der JP H03 142 187 A ist eine Greifeinrichtung bekannt, welche zwei ineinander geschachtelte Vakuumsauger umfasst. Die ineinander geschachtelten Vakuumsauger sind relativ in der Höhe zueinander verfahrbar, sodass entweder der Vakuumsauger mit einer größeren Greiffläche oder der Vakuumsauger mit einer kleineren Greiffläche an einem in der Größe entsprechenden Gegenstand angreift.

Aus der EP 1 967 301 A1 ist eine maschinelle Anordnung zur Bearbeitung von plattenförmigen Werkstücken mit einer Bearbeitungseinrichtung sowie eine Handlingsvorrichtung für die Bearbeitungsprodukte bekannt. Diese Bearbeitungsmaschine dient zur Bearbeitung von plattenförmigen Werkstücken, insbesondere Blechen. Bevorzugt wird dabei eine Stanz- und/oder Schneidbearbeitung durchgeführt. Zur Handhabung der Werkstücke umfasst die Handlingsvorrichtung eine Greifvorrichtung. Diese Greifvorrichtung weist ein oder mehrere Saugplatten auf, wobei an jeder Saugplatte eine Vielzahl von Vakuumsaugern vorgesehen ist. Zum Greifen der Werkstücke werden die Vakuumsauger zur Anlage an das Werkstück gebracht. Darauffolgend wird ein Vakuum angelegt, wodurch das Werkstück durch die Vakuumsauger ergriffen wird. Anschließend kann die Handhabung der Werkstücke erfolgen. Jeder dieser Vakuumsauger besteht aus einem an dem Werkstück angreifenden Saugelement sowie einem Ventil zur Steuerung des Vakuumsaugers.

Aus der DE 10 2014 215 102 A1 ist ein Flächensauggreifer zum Ansaugen und Handhaben von Werkstücken bekannt. Diese Flächensauggreifer umfassen ein geschlossenes Gehäuse mit einer fest integrierten Greifplatte, an welcher mehrere Saugöffnungen vorgesehen sind. Innerhalb des Gehäuses sind Verschlusskörper mit jeweils einem Dichtabschnitt vorgesehen. Dieser Dichtabschnitt kann eine oder mehrere Saugöffnungen mit dem Verschlusskörper verbinden und entsprechend der Anzahl der umgebenen Saugöffnungen an diesen Saugöffnungen einen Unterdruck anlegen. Dadurch können mehrere Gruppen von Saugöffnungen innerhalb einer Greifplatte angesteuert werden.

Der Erfindung liegt die Aufgabe zugrunde, eine Greifeinrichtung für eine Handlingsvorrichtung einer Bearbeitungsmaschine vorzuschlagen, welche eine Anpassung in der Haltekraft zum Transport von plattenförmigen Werkstücken ermöglicht.

Diese Aufgabe wird durch eine Greifvorrichtung für eine Handlingsvorrichtung gelöst, welche an einem Grundkörper mehrere Vakuumsauger umfasst, die zu zumindest einem Saugerfeld zueinander angeordnet sind und das zumindest eine Saugerfeld zum Handhaben der Werkstücke mit Unterdruck ansteuerbar ist, wobei am Grundkörper zumindest eine Halteeinrichtung vorgesehen ist, welche zumindest ein Dichtelement aufweist und das zumindest eine Saugerfeld umgibt, und welche eine Ansteuerungseinrichtung zum Anlegen eines weiteren Unterdrucks für das zumindest eine Dichtelement zum plattenförmigen Werkstück aufweist. Diese Anordnung weist den Vorteil auf, dass bei großen Kräften, beispielsweise beim Beladen oder Transport von einem nicht-bearbeiteten plattenförmigen Werkstück, zusätzlich zu den Vakuumsaugern des zumindest einen Saugerfeldes die Greifeinrichtung mit einer weiteren Haltekraft beaufschlagbar ist, welche durch das zumindest eine Dichtelement der Halteeinrichtung erzeugt wird, die das zumindest eine Saugerfeld umgibt. Somit kann die Haltekraft durch eine mit Unterdruck beaufschlagbare Fläche erhöht werden, die durch das Dichtelement begrenzt ist. Das Dichtelement umgibt das zumindest eine Saugerfeld, wodurch über eine größere Fläche als der des Saugerfeldes die zusätzliche Kraft gebildet werden kann. Durch diese Anordnung können des Weiteren die einzelnen Vakuumsauger und/oder Saugerfelder der Greifvorrichtung weiterhin optimal in Abhängigkeit der Geometrie auf dem zu handhabenden plattenförmigen Werkstück positioniert werden.

Bevorzugt umgibt ein Dichtelement alle am Grundkörper vorgesehenen Saugerfelder außenumlaufend. Dies ermöglicht eine konstruktiv einfache Ausgestaltung zur Erhöhung der Haltekraft. Die Anordnung und Ausgestaltung der Saugerfelder eines bekannten Greifelementes und deren Ansteuerung kann dabei beibehalten bleiben.

Alternativ kann für jedes Saugerfeld oder zumindest eine Gruppe von Saugerfeldern ein außenumlaufendes Dichtelement vorgesehen sein. Dadurch kann die Ansteuerung der Haltekraft für jedes Saugerfeld individualisiert und erhöht ermöglicht sein.

Des Weiteren umfasst die Ansteuereinrichtung der Halteeinrichtung zumindest ein Ventil zum Anlegen eines Unterdrucks, welches getrennt zum zumindest einen Ventil zur Ansteuerung der Vakuumsauger im Saugerfeld vorgesehen ist. Dies ermöglicht eine bedarfsweise Ansteuerung der Halteeinrichtung unter Beibehaltung der bisherigen Greiffunktion der Greifeinrichtung.

Eine weitere bevorzugte Ausführungsform der Ansteuereinrichtung sieht vor, dass das zumindest eine Ventil der Ansteuereinrichtung im Saugerfeld oder dem Saugerfeld zugeordnet vorgesehen ist. Dadurch kann eine kompakte Bauweise der Greifeinrichtung aufrechterhalten bleiben. Bevorzugt kann das Ventil der Ansteuervorrichtung an der Position eines Vakuumsaugers in einem Saugerfeld integriert sein.

Das zumindest eine Dichtelement der Halteeinrichtung kann relativ zu einer der durch die Vakuumsauger gebildeten Greifebene auf und ab bewegbar angesteuert werden. Diese Anordnung weist den Vorteil auf, dass das zumindest eine Dichtelement im Nichtgebrauchszustand gegenüber der Greifebene der Vakuumsauger abgehoben ist. Dadurch kann ein verringerter Verschleiß des zumindest einen Dichtelementes gegeben sein.

Bevorzugt ist das zumindest eine Dichtelement der Halteeinrichtung ist in der Höhe am Grundkörper mit einem Antrieb verfahrbar angesteuert, wobei das Dichtelement in einer Ausgangsposition oberhalb der durch die Vakuumsauger gebildeten Greifebene angeordnet ist. Durch den Antrieb kann das Dichtelement in eine Greifposition überführbar sein, die in der Greifebene der Vakuumsauger liegt oder gegenüber der Greifebene der Vakuumsauger hervorstehend positioniert ist. Diese Anordnung und Ausgestaltung ermöglicht ein sicheres Anliegen und Angreifen des zumindest einen Dichtelements auf dem zu handhabenden plattenförmigen Werkstück, um eine zusätzliche Haltekraft zu erzeugen. Auch einzelne Saugerfelder können mit deren Vakuumsaugern aus einer Nichtgebrauchsposition in eine Greifposition verfahren werden. Durch diese einzelne Ansteuerung der Vakuumsauger und/oder Saugerfelder können auch umgeformte plattenförmige Werkstücke gegriffen werden.

Vorteilhafterweise kann nach dem Aufsetzen des zumindest einen Saugerfeldes der Greifeinrichtung auf dem zu handhabenden plattenförmigen Werkstück das zumindest eine Dichtelement in eine Greifposition überführbar sein, wobei die Vakuumsauger des zumindest einen Saugerfeldes und das zumindest eine Dichtelement aufeinanderfolgend mit Unterdruck beaufschlagbar sind. Alternativ können auch die auf dem plattenförmigen Werkstück aufgesetzten Vakuumsauger des zumindest einen Saugerfeldes und das zumindest eine Dichtelement gleichzeitig mit Unterdruck beaufschlagbar sein. Im letzteren Fall kann eine Verkürzung eines Prozesszyklus erzielt werden.

Gemäß einer bevorzugten Ausführungsform der Greifeinrichtung ist der Antrieb für das zumindest eine auf und ab bewegbare Dichtelement zum Beipiel als ein Hubkolbenantrieb, insbesondere Pneumatikzylinder, als ein Linearantrieb, als ein elektromotorischer oder als ein elektromagnetischer Antrieb ausgebildet. Bevorzugt sind wenigstens zwei Hubkolbenantriebe vorgesehen, die einerseits am Grundkörper und andererseits an einem Halte-rahmen angreifen, der das Dichtelement aufnimmt, um eine Auf- und Abbewegung des Dichtelements anzusteuern.

Das zumindest eine Dichtelement der Halteeinrichtung ist bevorzugt als eine umlaufende Dichtlippe ausgebildet. Gemäß einer ersten Ausführungsform kann diese Dichtlippe aus einem thermoplastischen Elastomer ausgebildet sein. Auch ist möglich, dass eine solche Dichtlippe aus einem Schaumstoff ausgebildet ist. Insbesondere kann bei der Ausführung des Schaumstoffs eine einfache Anpassung in der Geometrie des Dichtelementes an die baulichen Konturen des Grundkörpers ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Bearbeitungsmaschine und einer Handlingsvorrichtung mit einer Vakuumsauger aufweisenden Greifvorrichtung gemäß dem Stand der Technik,
Figur 2 eine schematische Ansicht von unten auf eine Saugplatte der Greifvorrichtung in Figur 1 gemäß dem Stand der Technik,
Figur 3 eine perspektivische Ansicht auf eine Greifvorrichtung,
Figur 4 eine schematische Ansicht von unten auf die Greifvorrichtung gemäß Figur 3,
Figur 5 eine schematische Seitenansicht der Greifvorrichtung gemäß Figur 3 mit einer zusätzlichen Halteeinrichtung in einer Ausgangsposition,
Figur 6 eine schematische Schnittansicht der Greifvorrichtung gemäß Figur 5 mit der Halteeinrichtung in einer Greifposition,
Figur 7 eine schematische Ansicht der Greifvorrichtung gemäß Figur 6 in einer weiteren Konfiguration in einer Greifposition,
Figur 8 eine schematische Ansicht von unten auf eine alternative Ausführungsform der Greifeinrichtung gemäß Figur 3,
Figur 9 eine perspektivische Ansicht einer Greifvorrichtung mit mehreren Greifeinrichtungen gemäß Figur 3,
Figur 10 eine perspektivische Ansicht einer alternativen Ausführungsform der Greifvorrichtung gemäß Figur 9 mit mehreren Greifeinrichtungen gemäß Figur 3.

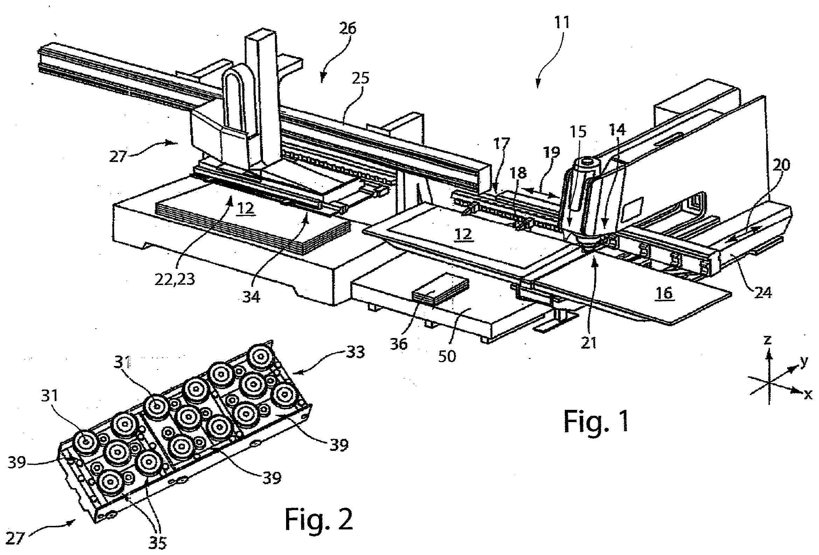

In Figur 1 ist perspektivisch eine Bearbeitungsmaschine 11 dargestellt, welche beispielsweise als Stanz-Maschine ausgebildet ist. Zur trennenden Bearbeitung eines plattenförmigen Werkstücks 12, beispielsweise in Form eines Bleches, ist eine vorzugsweise ortsfeste Bearbeitungseinrichtung 21 mit einem Stanzkopf 14 und mit einem nicht näher dargestellten Stanzstempel vorgesehen. Alternativ kann auch eine Laser-Stanz-Maschine eingesetzt werden, bei der benachbart zum Stanzkopf 14 ein Laserbearbeitungskopf vorgesehen ist. Das zu bearbeitende Werkstück 12 liegt während der Werkstückbearbeitung auf einer Werkstückauflage 16 auf. Das Werkstück 12 wird während der Bearbeitung mit einer Halteeinrichtung 17, welche vorzugsweise Klammern 18 umfasst, gehalten und kann gegenüber dem Stanzkopf 14 in der X-Richtung der Werkstückebene (X/Y-Ebene) mittels eines durch einen Pfeil angedeuteten konventionellen Linearantriebs 19 verfahren werden. In Y-Richtung der Werkstückebene kann das Werkstück 12 bewegt werden, indem die Werkstückauflage 16 zusammen mit der Halteeinrichtung 17 relativ zu einer Unterlage 24, auf welcher die Werkstückauflage 16 gelagert ist, mittels eines durch einen Pfeil angedeuteten herkömmlichen Linearantriebs 20 verfahren wird. Das Werkstück 12 lässt sich auf diese Weise in X- und Y-Richtung gegenüber dem Stanzkopf 14 verschieben, sodass der jeweils zu bearbeitende Bereich des Werkstücks 12 im Bearbeitungsbereich des Stanzkopfes 14 positioniert werden kann. Der Bearbeitungsbereich liegt zwischen dem Stanzkopf 14 und einer nicht näher dargestellten Stanzmatrize, die auswechselbar ist. Entsprechend kann in dem ortsfesten Bearbeitungsbereich des Laserbearbeitungskopfes bei einer Laser-Stanz-Maschine eine Laseroptik angeordnet sein.

Zur Werkstückauflage 16 der Bearbeitungsmaschine 11 ist an einer Stirnseite eine Handlingseinrichtung 26 vorgesehen, welche auch eine Greifeinrichtung 27 umfasst, die entlang zumindest einer Linearachse 25 von einer Be- und Entladeposition 22, 23 für das plattenförmige Material 12 in eine Entnahmeposition oder Warteposition verfahrbar ist, um ein bearbeitetes Werkstück 36 aufzunehmen und beispielsweise aus der Bearbeitungsmaschine 11 herauszuführen oder in einem Magazin 50 abzulegen.

Die Bearbeitungsmaschine 11 kann alternativ auch als eine Laserbearbeitungsmaschine oder eine Laserstanzbearbeitungsmaschine ausgebildet sein, welche anstelle eines offenen Grundkörpers einen geschlossenen Grundkörper, insbesondere einen umlaufenden Rahmen, aufweist, der sich bevorzugt in Y-Richtung erstreckt.

In Figur 2 ist eine perspektivische Ansicht von unten auf eine Greifeinrichtung 27 gemäß dem Stand der Technik dargestellt. Diese Greifeinrichtung 27 umfasst einen Grundkörper 33, der beispielsweise drei Saugerfelder 39 umfasst, innerhalb der ein oder mehrere Saugelemente 31 vorgesehen sind. Bei der dargestellten Ausführungsform sind beispielsweise fünf Vakuumsauger 35 zu einem Saugerfeld 39 einander zugeordnet. Diese Vakuumsauger 35 werden gemeinsam durch ein nicht näher dargestelltes Ventil mit einem Unterdruck angesteuert, um eine Haltekraft zu einem plattenförmigen Werkstück 12 zu erzeugen.

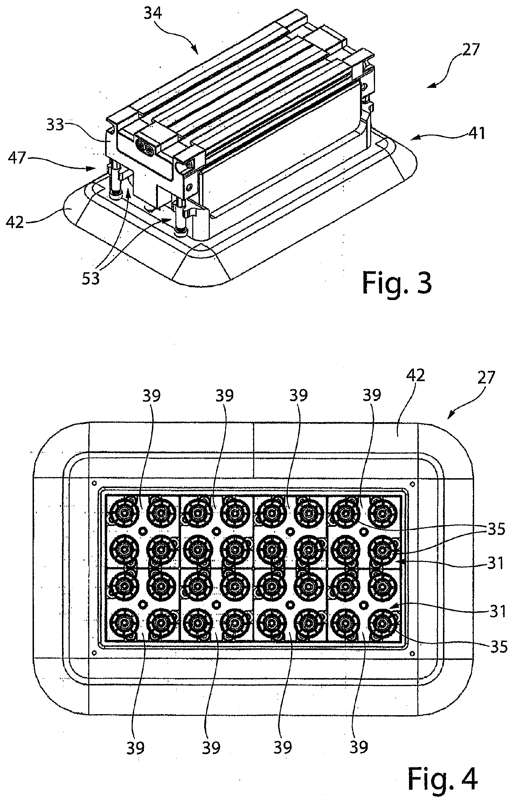

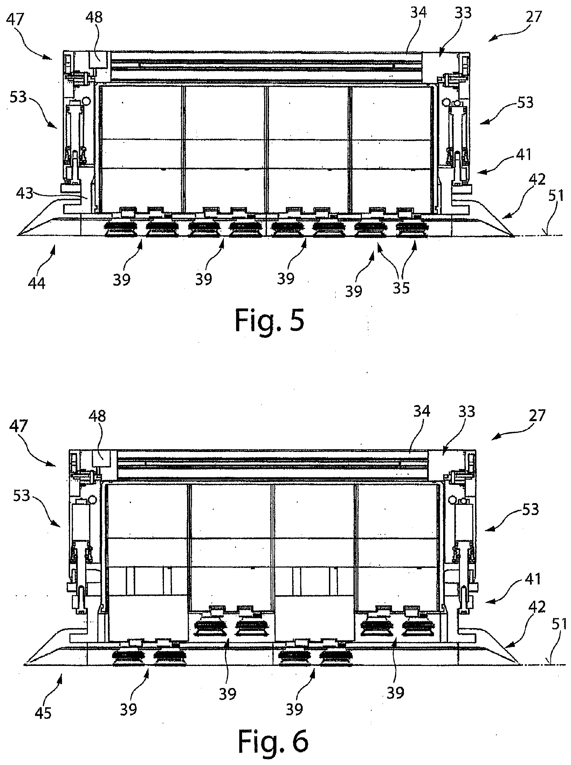

In Figur 3 ist eine perspektivische Ansicht einer erfindungsgemäßen Greifeinrichtung 27 dargestellt. Die Figur 4 zeigt eine schematische Ansicht von unten auf die Greifeinrichtung gemäß Figur 3. In Figur 5 ist eine schematische Schnittansicht der Greifeinrichtung 27 gemäß Figur 3 dargestellt.

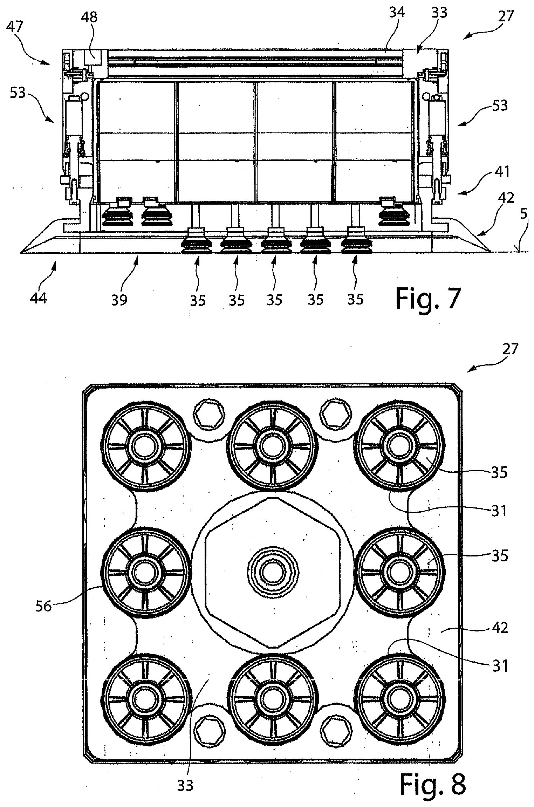

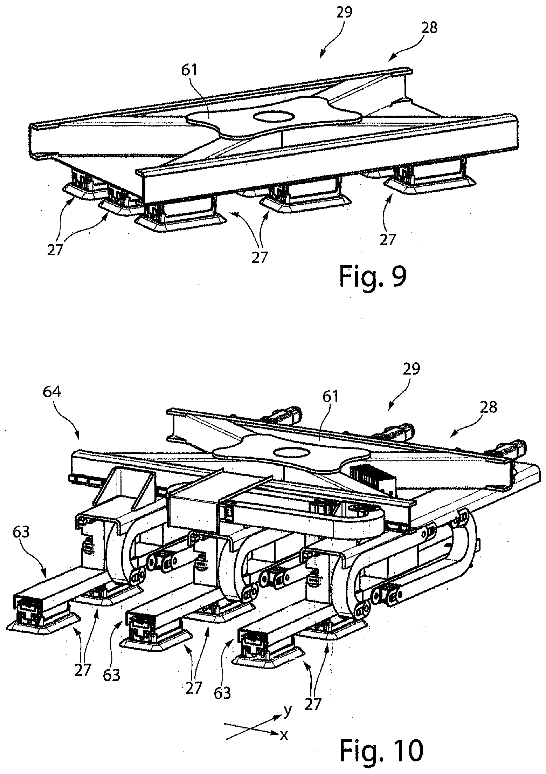

Die Greifeinrichtung 27 umfasst den Grundkörper 33, der an seiner Oberseite beispielsweise Befestigungselemente und/oder Befestigungsabschnitte 34 aufweist, um die Greifeinrichtung 27 einem Greifrahmen 28 einer Greifvorrichtung 29 (Figuren 8 und 9) zu fixieren. Aus der Ansicht gemäß Figur 4 geht hervor, dass diese Greifeinrichtung 27 beispielsweise acht Saugerfelder 39 umfasst, wobei jedem Saugerfeld 39 beispielsweise vier Vakuumsauger 35 zugeordnet sind.

An der Greifeinrichtung 27 ist eine Halteeinrichtung 41 vorgesehen, welche ein Dichtelement 42 und eine Ansteuereinrichtung 47 umfasst. Diese Ansteuereinrichtung 47 besteht aus zumindest einem Antrieb 53 und zumindest einem Ventil 48, über welches ein Unterdruck für das Dichtelement 42 ansteuerbar ist. Dieses Ventil 48 wird von einer nicht näher dargestellten Steuerung angesteuert. Diese nicht näher dargestellte Steuerung kann des Weiteren die Vakuumsauger 35 des Saugerfeldes 39 ansteuern.

Das Dichtelement 42 ist gemäß der dargestellten Ausführungsform als ein außen umlaufendes Dichtelement 42 dargestellt, welches alle Saugerfelder 39 der Greifeinrichtung 27 umgibt.

Das umlaufende Dichtelement 42 wird von einem Halterahmen 43 aufgenommen. Dieser Halterahmen 43 ist gegenüber dem Grundkörper 33 auf und ab bewegbar geführt. Zur Ansteuerung dieser Auf- und Abbewegung weist die Ansteuereinrichtung 47 einen Antrieb 53 auf, der mit einem Ende fest am Grundkörper 33 gelagert ist und mit einem gegenüberliegenden Ende am Halterahmen 43 angreift. Bevorzugt ist dieser Antrieb 53 als ein Hubkolbenantrieb ausgebildet. Vorteilhafterweise werden mehrere pneumatische Hubzylinder eingesetzt, um eine gleichmäßige Auf- und Abbewegung des Dichtelementes 42 anzusteuern. Der Antrieb 53 wird bevorzugt von der nicht näher dargestellten Steuerung angesteuert und ist mit dem Betrieb des zumindest einen Ventils für das Dichtelement 42 und den Ventilen zur Ansteuerung der Vakuumsauger 35 koordiniert.

Dieses umlaufende Dichtelement 42 ist gemäß Figur 5 in der Ausgangsposition 44 dargestellt. Die Vakuumsauger 35 sind bei der in Figur 5 dargestellten Ausführungsform ebenfalls in einer Ausgangsposition positioniert. Die zu einem Saugerfeld 39 einander zugeordneten Vakuumsauger 35 können in der Höhe aus der dargestellten Ruheposition in die Greifposition 45 verfahrbar sein, wie dies beispielsweise in Figur 6 und 7 dargestellt ist. Jedes Saugerfeld 39 kann einzeln ansteuerbar sein. Bei der Handhabung eines ebenen plattenförmigen Werkstücks 12 können alle Saugerfelder 39 in der in Figur 5 dargestellten Ruheposition oder alle in einer ausgefahrenen Greifposition 45 positioniert werden. Sofern ein plattenförmiges Werkstück 12 zu greifen ist, welches durch Umformen bearbeitet wurde und Erhebungen oder Auskragungen aufweist, können nur einzelne Saugerfelder 39 in die Greifposition 45 übergeführt werden, wie dies beispielsweise in Figur 6 dargestellt ist.

Gemäß einer Ausführungsform können beispielsweise alle Vakuumsauger 35 in der gemeinsamen Greifposition 45 angeordnet sein, wie dies in Figur 5 dargestellt ist. Sofern plattenförmige Werkstücke 12 mit einem geringeren Gewicht zu handhaben sind, können nur die Vakuumsauger 35 der Saugerfelder 39 angesteuert werden. Beispielsweise können auch nur einzelne Saugerfelder 39 angesteuert werden, da andere Saugerfelder 39 in einer Aussparung oder einem Freischnitt des plattenförmigen Werkstückes 12 liegen und somit keine Greiffunktion übernehmen können. Bei der Handhabung von plattenförmigen Werkstücken 12 mit einem höheren Gewicht kann zusätzlich zu den Vakuumsaugern 35 auch das Dichtelement 42 mit Unterdruck beaufschlagt werden.

In Figur 6 ist eine Schnittansicht der Greifeinrichtung 27 dargestellt, bei welcher das Dichtelement 42 und einzelne Saugerfelder 39 in die Greifposition 45 übergeführt sind. Bei der Positionierung des Dichtelementes 42 in der Greifposition 45, bei welcher das Dichtelement 42 in der Greifebene 51 der Vakuumsauger 35 liegt, kann zur Handhabung des plattenförmigen Werkstücks gemäß einer ersten Ausführungsform eine Ansteuerung vorgesehen sein, wonach zunächst die Vakuumsauger 35 mit Unterdruck beaufschlagt werden und darauffolgend das Dichtelement 42 mit Unterdruck beaufschlagt wird. Auch können einzelne Saugerfelder 39 der Greifeinrichtung 27 mit Unterdruck beaufschlagt werden, wobei die Auswahl der Ansteuerung der Saugerfelder 39 an die Geometrie des zu handhabenden plattenförmigen Werkstücks 12 angepasst ist. Beispielsweise kann das zu handhabende plattenförmige Werkstück eine Aussparung oder eine Ausnehmung aufweisen, die einem Saugerfeld 39 zugeordnet ist, sodass nicht erforderlich ist, dieses Saugerfeld 39 mit Unterdruck zu beaufschlagen.

In Figur 7 ist eine Schnittansicht der Greifeinrichtung 27 in einer weiteren alternativen Ausführungsform und Greifposition 45 dargestellt. Bei dieser Ausführungsform ist vorgesehen, dass anstelle einzelner Saugerfelder 39, wie dies in Figur 6 dargestellt ist, nur einzelne Vakuumsauger 35 in eine Greifposition 45 überführbar sind. Diese Anordnung weist den Vorteil auf, dass die einzelnen Vakuumsauger 35 in Anpassung an die Geometrie des zu handhabenden plattenförmigen Werkstücks 12 in die Greifposition 45 übergeführt werden. In dieser übergeführten Greifposition 45 werden diese Vakuumsauger 35 auch mit Vakuum beaufschlagt. Die nicht ausgefahrenen Vakuumsauger 35 können stillgesetzt bleiben.

Auch kann eine Kombination der Ausführungsform gemäß Figuren 6 und 7 möglich sein, so dass einzelne Saugerfelder 39 in die Greifposition 45 übergeführt werden und benachbart dazu einzelne Vakuumsauger 35.

Alternativ kann die Halteeinrichtung 41 der Greifeinrichtung 27 derart ansteuerbar sein, dass das zumindest eine Dichtelement 42 gegenüber den Saugerfeldern 39 mit dem Vakuumsauger 35 hervorstehend positioniert ist, sodass nur das Dichtelement 42 an dem zu handhabenden plattenförmigen Werkstück 12 anliegt, ohne dass die Vakuumsauger 35 des zumindest einen Saugerfeldes 39 mit Unterdruck beaufschlagt werden.

Bei dem vorbeschriebenen Ausführungsbeispiel ist das Dichtelement 42 bevorzugt als eine Dichtlippe ausgebildet. Dabei kann ein thermoplastisches Elastomer eingesetzt werden.

In Figur 8 ist eine alternative Ausführungsform der Greifeinrichtung 27 dargestellt. Diese Greifeinrichtung 27 umfasst beispielsweise neun Vakuumsauger, die innerhalb einer beispielsweise quadratischen Grundfläche der Greifeinrichtung 27 einander zugeordnet sind. Außen umlaufend ist das Dichtelement 42 vorgesehen. Dieses Dichtelement 42 kann an die quadratische Kontur des Grundkörpers 33 angepasst sein. Darüber hinaus kann sich das Dichtelement 42 zumindest abschnittsweise zwischen zwei benachbarte Vakuumsaugern 35 in den Zwischenraum hinein erstrecken. Dadurch kann eine vergrößerte Dichtfläche geschaffen werden. Das Dichtelement weist somit halbkreisförmige Aussparungen 56 auf, zu denen die Vakuumsauger 35 ausgerichtet sind. Bei dieser Ausführungsform ist bevorzugt das Dichtelement 42 aus Schaumstoff ausgebildet. Dadurch kann eine innere Umfangsfläche des Dichtelements 42 in einfacher Weise in diese halbkreisförmigen Aussparungen 56 beziehungsweise dreiviertelkreisförmige Vertiefungen im Eckbereich des Dichtungselementes 42 eingebracht werden.

In Figur 9 ist eine perspektivische Ansicht einer Greifvorrichtung 29 mit mehreren Greifeinrichtungen 27 dargestellt. Diese Greifvorrichtung 29 umfasst eine Greifaufnahme 28, an welcher ein Montageflansch 61 zur Anbringung an der Handlingseinrichtung 26 vorgesehen ist. Die Greifeinrichtungen 27 sind bevorzugt in einem Rastermaß, insbesondere in Zeilen und Spalten, an der Greifaufnahme 28 angeordnet. Diese Greifeinrichtungen 27 sind in ihrer Position fixiert und nicht verfahrbar an der Greifaufnahme 28 vorgesehen.

In Figur 10 ist eine alternative Ausgestaltung der Greifvorrichtung 29 zu Figur 9 dargestellt. An der Greifaufnahme 28 der Greifvorrichtung 29 sind bevorzugt Linearachsen 63 vorgesehen, welche bezüglich einer Verfahrrichtung, insbesondere in Y-Richtung, individuell ansteuerbar sind. An diesen Linearachsen 63 sind die Greifeinrichtungen 27 vorgesehen, wobei insbesondere noch vorgesehen sein kann, dass die Greifeinrichtungen 27 entlang der Länge der Linearachsen 63 und/oder im Abstand zueinander veränderbar sind.

Auch können die Linearachsen 63 an zumindest einer weiteren, im rechten Winkel dazu ausgerichteten Linearachse 64 vorgesehen sein, durch welche der Abstand der Greifeinrichtungen 27 in X-Richtung verfahrbar sind. Zusätzlich können die die Greifeinrichtung 27 tragenden Linearachsen 63 im Abstand zueinander veränderbar von der zumindest einen weiteren Linearachse 64 aufgenommen sein.

## Patentansprüche

1. Greifeinrichtung für eine Handlingsvorrichtung (26) einer Bearbeitungsmaschine (11), insbesondere zur Handhabung von plattenförmigen Werkstücken (12), mit mehreren an einem Grundkörper (33) vorgesehenen Vakuumsaugern (35), die zu zumindest einem Saugerfeld (39) zueinander angeordnet sind und zumindest ein Saugerfeld (39) zum Handhaben des Werkstücks (12) mit Unterdruck beaufschlagbar ist,
- mit zumindest einer an dem Grundkörper (33) vorgesehenen Halteeinrichtung (41), welche zumindest ein Dichtelement (42) aufweist und die Vakuumsauger (35) umgibt, und mit zumindest einer Ansteuereinrichtung (47) zum Anlegen eines Unterdrucks für das zumindest eine Dichtelement (42) zum Angreifen am plattenförmigen Werkstück (12).
**dadurch gekennzeichnet,**
**dass** die Vakuumsauger (35) einzeln oder die zu zumindest einem Saugerfeld (39) zugeordneten Vakuumsauger (35) aus einer Ruheposition (38) in eine Greifposition (45) verfahrbar sind, und
**dass** das zumindest eine Dichtelement (42) relativ zu einer durch die Vakuumsauger (35) gebildeten Greifebene (51) auf und ab bewegbar am Grundkörper (33) vorgesehen ist, und das zumindest eine Dichtelement (42) in der Höhe am Grundkörper (33) mit einem Antrieb (53) der Ansteuereinrichtung (47) verfahrbar angeordnet ist und in einer Ausgangsposition (44) oberhalb einer durch die Vakuumsauger (35) gebildeten Greifebene (51) angeordnet ist und in einer Greifposition (45) in der durch die Vakuumsauger (35) gebildeten Greifebene (51) oder gegenüber der Greifebene (51) hervorstehend positionierbar ist.

2. Greifeinrichtung nach Anspruch 1, **dadurch gekennzeichnet, dass** die an dem Grundkörper (33) vorgesehenen Saugerfelder (39) innerhalb des außen umlaufenden Dichtelementes (42) angeordnet sind.

3. Greifeinrichtung nach Anspruch 1, **dadurch gekennzeichnet, dass** für jedes Saugerfeld (39) oder für zumindest eine Gruppe aus mehreren Saugerfeldern (39) ein außen umlaufendes Dichtelement (42) am Grundkörper (33) vorgesehen ist.

4. Greifeinrichtung nach einem der vorhergehenden Ansprüche, **dadurch gekennzeichnet, dass** die Ansteuereinrichtung (47) zumindest ein Ventil (48) zum Anlegen eines Unterdrucks aufweist, welches getrennt von zumindest einem Ventil zur Ansteuerung der Vakuumsauger (35) und/oder des zumindest einen Saugerfeldes (39) ansteuerbar ist.

5. Greifeinrichtung nach Anspruch 4, **dadurch gekennzeichnet, dass** das zumindest eine Ventil (48) der Ansteuerungseinrichtung (47) im Saugerfeld (39) vorgesehen oder dem Saugerfeld (39) zugeordnet ist, welches vom Dichtelement (42) umgeben ist.

6. Greifeinrichtung nach einem der Ansprüche 1 bis 5, **dadurch gekennzeichnet, dass** das zumindest eine Saugerfeld (39) in der Höhe zum Grundkörper (33) verfahrbar ist.

7. Greifeinrichtung nach Anspruch 1 oder 6, **dadurch gekennzeichnet, dass** nach dem Aufsetzen des zumindest einen Saugerfeldes (39) auf dem zu handhabenden Werkstück (12) das zumindest eine Dichtelement (42) in eine Greifposition (45) überführbar ist und die Vakuumsauger (35) des zumindest einen Saugerfeldes (39) und darauffolgend das Dichtelement (42) oder beide gleichzeitig mit Unterdruck beaufschlagbar sind.

8. Greifeinrichtung nach Anspruch 1, **dadurch gekennzeichnet, dass** der Antrieb (53) als ein Hubkolbenantrieb, insbesondere Pneumatikzylinder, oder als ein Linearantrieb oder elektromotorischer oder elektromagnetischer Antrieb ausgebildet ist.

9. Greifeinrichtung nach einem der vorhergehenden Ansprüche, **dadurch gekennzeichnet, dass** das Dichtelement (42) als eine umlaufende Dichtlippe ausgebildet ist, welche vorzugsweise aus einem elastischen Material, beispielsweise einem Elastomer oder einem Schaumstoff, ausgebildet ist.

## Claims

1. Gripping device for a handling device (26) of a processing machine (11), in particular for handling plate-shaped workpieces (12), with a plurality of vacuum suction cups (35) provided on a base body (33), which are arranged relative to one another to form at least one suction cup field (39) and at least one suction cup field (39) can be subjected to negative pressure for handling the workpiece (12),
- having at least one holding device (41) which is provided on the base body (33), has at least one sealing element (42) and surrounds the vacuum suction cups (35), and having at least one actuating device (47) for applying a negative pressure to the at least one sealing element (42) for engaging the plate-shaped workpiece (12).
**characterized**
**in that** the vacuum suction cups (35) can be moved individually or the vacuum suction cups (35) assigned to at least one suction cup field (39) can be moved from a rest position (38) into a gripping position (45), and
**in that** the at least one sealing element (42) is provided on the base body (33) so as to be movable up and down relative to a gripping plane (51) formed by the vacuum cups (35), and the at least one sealing element (42) is arranged to be movable in height on the base body (33) by means of a drive (53) of the actuating device (47) and is arranged in an initial position (44) above a gripping plane (51) formed by the vacuum cups (35) and can be positioned in a gripping position (45) in the gripping plane (51) formed by the vacuum cups (35) or projecting with respect to the gripping plane (51).

2. Gripping device according to claim 1, **characterized in that** the suction cup fields (39) provided on the base body (33) are arranged inside the externally circumferential sealing element (42).

3. Gripping device according to claim 1, **characterized in that** for each suction cup field (39) or for at least one group of several suction cup fields (39), an externally circumferential sealing element (42) is provided on the base body (33).

4. Gripping device according to one of the preceding claims, **characterized in that** the actuating device (47) has at least one valve (48) for applying a negative pressure, which can be actuated separately from at least one valve for actuating the vacuum suction cups (35) and/or the at least one suction cup field (39).

5. Gripping device according to claim 4, **characterized in that** the at least one valve (48) of the actuating device (47) is provided in the suction cup field (39) or is assigned to the suction cup field (39), which is surrounded by the sealing element (42).

6. Gripping device according to one of claims 1 to 5, **characterized in that** the at least one suction cup field (39) is movable in height relative to the base body (33).

7. Gripping device according to claim 1 or 6, **characterized in that**, after the at least one suction cup field (39) has been placed on the workpiece (12) to be handled, the at least one sealing element (42) can be transferred into a gripping position (45) and the vacuum suction cups (35) of the at least one suction cup field (39) and subsequently the sealing element (42) or both can be simultaneously subjected to negative pressure.

8. Gripping device according to claim 1, **characterized in that** the drive (53) is designed as a reciprocating piston drive, in particular a pneumatic cylinder, or as a linear drive or electromotive or electromagnetic drive.

9. Gripping device according to one of the preceding claims, **characterized in that** the sealing element (42) is designed as a circumferential sealing lip, which is preferably made of an elastic material, for example an elastomer or a foam material.

## Revendications

1. Dispositif de préhension pour un dispositif de manutention (26) d'une machine d'usinage (11), en particulier pour la manipulation de pièces à usiner en forme de plaques (12), comprenant plusieurs ventouses à vide (35) prévues sur un corps de base (33), qui sont disposées les unes par rapport aux autres pour former au moins un champ de ventouses (39), et au moins un champ de ventouses (39) pouvant être soumis à une dépression pour manipuler la pièce à usiner (12),
- avec au moins un dispositif de retenue (41) prévu sur le corps de base (33), qui présente au moins un élément d'étanchéité (42) et qui entoure les ventouses à vide (35), et avec au moins un dispositif de commande (47) pour appliquer une dépression à l'au moins un élément d'étanchéité (42) afin de venir en prise avec la pièce à usiner en forme de plaque (12).
**caractérisé**
**en ce que** les ventouses à vide (35) individuellement ou les ventouses à vide (35) associées à au moins un champ de ventouses (39) peuvent être déplacées d'une position de repos (38) à une position de préhension (45), et
**en ce que** le au moins un élément d'étanchéité (42) est prévu sur le corps de base (33) de manière à pouvoir se déplacer vers le haut et vers le bas par rapport à un plan de préhension (51) formé par les ventouses à vide (35), et le au moins un élément d'étanchéité (42) est disposé de manière à pouvoir être déplacé en hauteur sur le corps de base (33) à l'aide d'un entraînement (53) du dispositif de commande (47) et est disposé dans une position initiale (44) au-dessus d'un plan de préhension (51) formé par les ventouses à vide (35) et dans une position de préhension (45) dans le plan de préhension (51) formé par les ventouses (35) ou en saillie par rapport au plan de préhension (51).

2. Dispositif de préhension selon la revendication 1, **caractérisé en ce que** les champs de ventouses (39) prévus sur le corps de base (33) sont disposés à l'intérieur de l'élément d'étanchéité périphérique extérieur (42).

3. Dispositif de préhension selon la revendication 1, **caractérisé en ce qu'**un élément d'étanchéité périphérique extérieur (42) est prévu sur le corps de base (33) pour chaque zone d'aspiration (39) ou pour au moins un groupe de plusieurs zones d'aspiration (39).

4. Dispositif de préhension selon l'une des revendications précédentes, **caractérisé en ce que** le dispositif de commande (47) comporte au moins une soupape (48) pour appliquer une dépression, qui peut être commandée séparément d'au moins une soupape pour commander les ventouses à vide (35) et/ou au moins une zone de ventouses (39).

5. Dispositif de préhension selon la revendication 4, **caractérisé en ce que** la au moins une soupape (48) du dispositif de commande (47) est prévue dans le champ de ventouses (39) ou est associée au champ de ventouses (39) qui est entouré par l'élément d'étanchéité (42).

6. Dispositif de préhension selon l'une des revendications 1 à 5, **caractérisé en ce que** la au moins une zone de ventouses (39) est déplaçable en hauteur par rapport au corps de base (33).

7. Dispositif de préhension selon la revendication 1 ou 6, **caractérisé en ce qu'**après la mise en place de la au moins une zone d'aspiration (39) sur la pièce à manipuler (12), le au moins un élément d'étanchéité (42) peut être transféré dans une position de préhension (45) et les ventouses à vide (35) de la au moins une zone d'aspiration (39) puis l'élément d'étanchéité (42) ou les deux simultanément peuvent être soumis à une dépression.

8. Dispositif de préhension selon la revendication 1, **caractérisé en ce que** l'entraînement (53) est conçu comme un entraînement à piston alternatif, en particulier un vérin pneumatique, ou comme un entraînement linéaire ou un entraînement électromotorique ou électromagnétique.

9. Dispositif de préhension selon l'une des revendications précédentes, **caractérisé en ce que** l'élément d'étanchéité (42) est conçu comme une lèvre d'étanchéité périphérique, qui est de préférence réalisée dans un matériau élastique, par exemple un élastomère ou une mousse.
